# DEMANDE DE BREVET EUROPEEN

(11) **EP 1 855 472 A2**
(43) Date de publication de la demande: **14.11.2007**
(21) Numéro de dépôt: 07016600.4
(22) Date de dépôt: 30.12.2005
(51) Int. Cl.: H04N 5/76, H04N 5/00, G11B 31/00, H04N 5/44, H04N 5/46, H04N 7/16

(54) **Téléviseur multifonction et autonome**

(62) Demande divisionnaire de: 05292824.9
(71) Demandeur: Le Club Confort et Sécurité, 77250 Veneux les Sablons (FR)
(72) Inventeur: Girard, Laetitia, 77670 Vernou La Celle Sur Seine (FR); Crampon, Francois, 77300 Fontainebleau (FR); Czuba, Rodolphe, 89150 Saint Valerien (FR); Serin, Bernard, 77250 Veneux Les Sablons (FR)
(74) Mandataire: Pontet, Bernard

(57) **Abrégé**

La présente innovation oonceme un téléviseur multifonction 4 en 1 de nouvelle génération dit T.U.M.E.A Téléviseur Universel Multimédia Et Autonome :
1. Réception, démodulation et décodage de tous signaux TV numériques DVB et IP,
2. Reproduction numérique de l'image et du son,
3. Enregistrement numérique sur disque dur,
4. Archivage par graveur CD / DVD,

T.U.M.E.A est un nouvel appareil électronique grand public multifonction de grande qualité et apte à préserver intégralement la chaîne numérique, en restituant du 100 % numérique.

T.U.M.E.A est doté des entrées numériques aptes à recevoir, à diffuser, enregistrer, archiver, échanger des flux audio vidéo avec tout terminal ou appareil numérique. T.U.M.E.A comporte des connecteurs USB destinés à réaliser des entrées - sorties audio vidéo avec tout autre appareil doté d'un câble USB.

T.U.M.E.A comporte un connecteur Ethemet afin d'établir un réseau numérique avec les terminaux secondaires MiniBox, les passerelles IP, les PC, les modems et tout autre appareil doté d'un port Ethernet.

## Description

La présente invention se rapporte à un téléviseur multifonction sous forme de combiné tout intégré. Elle concerne également un système mettant en oeuvre un tel téléviseur ainsi qu'une télécommande utilisée dans un tel système.

Il existe à la vente des centaines de produits pour faciliter le confort et les loisirs dans les foyers : micro-ordinateurs, décodeurs, téléviseurs, lecteurs de CD/DVD, home-cinéma, magnétoscopes analogiques ou numériques, jeux vidéos,... cependant souvent la mise en route et l'utilisation de ceux-ci demeurent compliquées. En effet, les utilisateurs doivent acquérir, sans cesse, de vastes connaissances pour maîtriser des technologies très évolutives et être en mesure de choisir des produits adaptés à leurs objectifs. Les grands groupes électroniques ont une vision parcellaire et très standardisée des besoins des particuliers. Ils ne semblent pas toujours se préoccuper de l'uniformité et de la transversalité des divers équipements du foyer de chaque utilisateur.

Ainsi, au fur et à mesure des achats de leurs équipements, les utilisateurs se retrouvent notamment avec du matériel disparate et de multiples télécommandes. A titre d'exemple, en France, l'avènement de la Télévision Numérique Terrestre entraînera une évolution progressive des 23 millions de foyers équipés d'au moins 1 téléviseur, et plus particulièrement les 10 millions de foyers non abonnés au satellite ou au câble, de la réception des chaînes analogiques vers la Télévision Numérique Terrestre. Cette évolution nécessite l'achat d'un décodeur spécifique probablement accompagné d'une nouvelle télécommande, ou d'un nouveau téléviseur intégrant ce décodeur ou téléviseur numérique.

D'une façon générale, de nombreuses évolutions des dernières années ont largement contribué à la complexité qui règne dans la prise en main des appareils autour du téléviseur :
- Les «sources» des signaux de la télévision numérique se sont multipliées récemment : terrestre, satellite, câble, IP ( sur Internet via ADSL/SDSL .... ), ce qui entraîne la multiplication des décodeurs ou adaptateurs numériques, le plus souvent dédiés à chaque source;
- La complexité de mixer les multiples technologies ou systèmes de cryptage des bouquets payants de TV ou de V.O.D, les différentes technologies de gestion des DRM "Digital Right Management" en langue anglaise, pour la gestion des droits d'auteurs d'oeuvres audio vidéos;
- La complexité de la mise en réseau des différents appareils électroniques, qui nécessite le plus souvent d'avoir recours à un PC;
- L'impossibilité actuelle de diffuser de multiples programmes TV en numérique vers d'autres téléviseurs ( 45 % des foyers français possèdent plusieurs téléviseurs ); les transmetteurs sans fils actuels n'étant ni multi TV ni multi programmes.
- Etc....

La présente invention a pour but de remédier aux inconvénients précités en regroupant plusieurs fonctionnalités dans un module simple d'utilisation, universelle et autonome.

Un autre but de l'invention est une diffusion de signaux TV de grande qualité.

L'invention a encore pour but de permettre au téléviseur de s'adapter à la plupart des usages et normes internationaux.

On atteint au moins l'un des objectifs précités avec un téléviseur multifonction sous forme de combiné tout intégré selon la revendication 1. Ce téléviseur peut comprendre :
- un écran d'affichage de la vidéo en qualité numérique,
- des hauts parleurs de diffusion de l'audio en qualité numérique
- des moyens de démodulation et décodage de signaux TV analogiques et numériques;
- des moyens d'acquisition, de numérisation et d'encodage de signaux audio/vidéo de type analogiques,
- des moyens d'enregistrement numérique des signaux numériques sur disque dur intégré,
- des moyens d'archivage des signaux numériques au moyen d'un graveur-lecteur CD/DVD intégré,
- des moyens de diffusion de signaux audio/vidéo et de données vers des terminaux numériques ou analogiques secondaires,
- des moyens pour importer et exporter des contenus audio/vidéo et de données sous forme de fichiers numériques, et
- des moyens de connexions à des réseaux de communication.

Avec le téléviseur multifonction selon la présente invention, il est possible de réceptionner un contenu numérique, de le diffuser sous forme numérique ou de le sauvegarder sous forme numérique, ce qui signifie un contenu de grande qualité : une chaîne tout numérique. Dans les appareils de l'art antérieur, les terminaux électroniques actuels de type Set Top Box, c'est à dire destinés à être reliés à un téléviseur, sont des éléments séparés répondant à des fonctionnalités dédiées. Ces terminaux de l'art antérieur dégradent souvent des signaux numériques puisqu'ils proposent généralement des sorties analogiques.

Le regroupement des moyens dans un seul téléviseur multifonction selon l'invention résulte en un gain de place, un nombre limité de composants et une performance accrue. On n'utilise pas de câbles extérieurs pour transférer les signaux contrairement à ce qui se produit actuellement lorsqu'on empile plusieurs appareils sous le téléviseur.

La diversité des qualités d'images ( d'origine analogique en mode progressif ou entrelacé, d'origine numérique en simple ou haute définition ) et des qualités du son (analogique en mono ou en stéréo) nécessite actuellement pour les téléviseurs de l'art antérieur d'avoir recours à des terminaux externes. Le téléviseur multifonction selon l'invention est avantageusement apte à diffuser et transmettre des signaux audio/vidéo de grande qualité.

La présente invention propose un téléviseur multifonction dit universel car il comporte des entrées et sorties analogiques et numériques pour les signaux audio, vidéo et de données, en temps réel, par paquets (communication de type IP notamment) ou sous forme de fichier informatique. Le téléviseur multifonction selon l'invention est également dit autonome car il est capable d'assumer seul ses fonctionnalités du fait qu'il comporte des moyens matériels et logiciels. Il ne nécessite pas une connexion obligatoire à un ordinateur. Autonomie signifie également qu'il a les capacités de s'inscrire dans la "convergence" telle que définie par le consortium DLNA (www.dlna.ora ). Il peut communiquer avec un ordinateur, un modem-routeur ADSL ou tout autre terminal doté d'un port Ethernet.

En particulier, le téléviseur multifonction selon l'invention comprend une carte de type électronique embarqué ou une carte mère de type PC dotée d'un microcontrôleur de type "mono-puce". Ces "chips" mono-puce ou "tout sur une puce" sont constitués d'un CPU pour le pilotage général et la gestion des périphériques ( ATA, PCI, IEEE1394, USB, RJ45... ) et de deux DSP dédiés, l'un à l'audio et l'autre à la vidéo.

Les capacités des DSP ont considérablement évolué et sont devenues plus performantes que les "northbridge" (contrôleurs mémoire) des PC. Il n'est pas rare de voir un DSP vidéo décoder du MPEG 4 en Haute Définition et cela sur 2 canaux en parallèle. De même, ces DSP vidéo peuvent décoder (en"hardware" ) du Wmv-9 alors qu'il faut un CPU très puissant sur un PC. Ces chips mono-puce sont à très basse consommation d'énergie, ce qui permet de se dispenser d'installer un ventilateur pour traiter les besoins habituels de dissipation thermique.

Selon un mode de réalisation de l'invention, les moyens de démodulation et décodage comprennent au moins :
- un double tuner pour la réception de signaux TV hertzien analogique,
- un démodulateur associé à un double tuner pour la réception de signaux TV numérique terrestre,
- un démodulateur associé à un double tuner pour la réception de signaux TV numérique satellite, et
- un démodulateur numérique multicanaux xDSL pour la réception de signaux TV numérique.

Pour la réception des signaux TV analogiques ou numériques d'un opérateur payant, on peut raccorder le décodeur de cet opérateur TV (terrestre, satellite, câble ou xDSL pour V.O.D) ou le modem du F.A.I (Fournisseur d'accès Internet) , au téléviseur multifonction; Les décodeurs, modems ou autres boîtiers opérateurs ou F.A.I comportant déjà la gestion des droits et la ou les cartes d'abonnés.

Avantageusement, le téléviseur multifonction selon l'invention peut comprendre en outre des moyens de décryptage de signaux TV numérique au moyen d'une clé de décryptage contenue dans un moyen de stockage. Par clé de décryptage, on entend toute donnée (code, identifiant, mot de passe, clé privée,...) permettant le décryptage et le désembrouillage de flux de signaux TV. Ce moyen de stockage, qui peut être une carte, est destiné à s'insérer dans un lecteur connecté de manière amovible au téléviseur multifonction. Ce moyen de stockage comprend en outre des données relatives à la gestion des droits d'auteurs. De préférence, le lecteur est connecté au téléviseur multifonction via une liaison de type USB.

A titre d'exemple, l'encodage des signaux est réalisé sous un format de type MPEG2 ou MPEG4.

Selon un mode de réalisation avantageux de l'invention, le disque dur ainsi que le graveur CD/DVD peuvent être de type extractible c'est à dire intégrés de manière amovible. Ceci rend le téléviseur multifonction modulable, évolutif et permet notamment de :
- remplacer rapidement un élément en cas de panne,
- remplacer un élément en cas de changement de caractéristiques (plus grande capacité du disque dur, graveur-lecteur CD/DVD plus rapide ou Haute Définition... ),
- Etc....

Avantageusement, le téléviseur multifonction peut en outre comprendre :
- des connecteurs d'entrée de type RJ45 et USB pour la réception des flux de télévision par xDSL, la vidéo à la demande (VOD) et les contenus Internet, de façon indépendante ou multiplexée;
- des connecteurs d'entrée audio/vidéo numérique HDMI, DVI, S/PDIF coaxial et/ou S/PDIF optique pour la réception audio / vidéo numérique depuis les terminaux des opérateurs TV ou des fournisseurs d'accès Internet;
- des connecteurs d'entrée audio/vidéo analogique Péritel et VGA pour la réception audio / vidéo analogique depuis les terminaux des opérateurs TV ou des fournisseurs d'accès Internet;
- des connecteurs de sortie audio numérique S/PDIF coaxial et/ou S/PDIF optique;
- des connecteurs de sortie audio analogique Péritel et RCA;
- un connecteur d'entrée de type DV IEEE1394 et des capacités de décompression des signaux audio et vidéo numériques provenant d'un caméscope numérique notamment à la norme DV, ainsi que des moyens d'encodage ou de transcodage et de compression en format MPEG-2 ou MPEG-4;
- des connecteurs d'entrée Péritel et RCA permettant l'acquisition des signaux audio et vidéo analogiques et des moyens d'encodage et de compression en format MPEG-2 ou MPEG-4 après numérisation; les moyens de décodage et d'encodage MPEG sont disponibles pour tous signaux audio/vidéo numériques du téléviseur.
- un connecteur USB permettant le transfert de contenus numériques (audio, vidéo et photos par exemple) depuis et vers des appareils divers externes, tels que disque dur, baladeur audio MP3 / WMA, baladeur audio/vidéo MPEG-4 / DivX;
- un lecteur de cartes mémoire multi format x-en-1 permettant le transfert de contenus numériques;
- un connecteur de type USB (USB 2.0 "HighSpeed" notamment) apte à être connectée à une clé WiFi (802.11g ou supérieur) afin de communiquer par réseau sans fil avec des ordinateurs et des terminaux externes;
- un connecteur de type RJ45 et un connecteur de type USB (2.0 "HighSpeed") apte à être connecté à une prise CPL afin de communiquer par réseau CPL avec des ordinateurs et des terminaux externes.
   Suivant un autre aspect de l'invention, il est proposé un système comprenant un téléviseur multifonction tel que défini ci-dessus. Ledit téléviseur multifonction comprend des moyens émetteur-récepteur sans fil (IR et/ou RF) permettant la communication bidirectionnelle avec une télécommande; ladite télécommande possédant elle-même un moyen d'émission-réception compatible avec ledit téléviseur multifonction. On utilise donc une télécommande unique pour la commande de l'ensemble des fonctionnalités proposées par le téléviseur multifonction.
   Suivant encore un autre aspect de l'invention, il est proposé un système comprenant un téléviseur multifonction tel que défini ci-dessus, le téléviseur multifonction comprenant des moyens de diffusion de contenus numériques vers au moins un terminal numérique secondaire servant de relais à la diffusion desdits contenus numériques, la liaison entre le téléviseur multifonction et ledit au moins un terminal secondaire étant de type réseau Ethernet, CPL ou sans fil. Ledit au moins un terminal secondaire possède des capacités de réception et de décodage de contenus numériques. Ce terminal secondaire peut être relié à un autre téléviseur et comprendre des moyens de sélection des programmes de télévision reçus par le téléviseur multifonction; ce terminal secondaire étant relié au téléviseur multifonction via une liaison bidirectionnelle. On peut ainsi disposer plusieurs téléviseurs dans plusieurs pièces et visualiser des programmes différents simultanément.
   De préférence, ledit au moins un terminal secondaire comprend en outre des connecteurs de sortie audio/vidéo numérique HDMI, DVI, S/PDIF coaxial et/ou S/PDIF optique.. Il peut aussi comprendre des connecteurs de sortie audio/vidéo analogique Péritel, RCA (pour l'audio et/ou la vidéo) et VGA (pour la vidéo).
   En complément notamment de ce qui précède, le connecteur (entrée ou sortie) HDMI peut être utilisé seul car il véhicule de la vidéo et de l'audio. Le connecteur (entrée ou sortie) DVI (vidéo) est associé à un connecteur S/PDIF (audio). De la même manière le péritel (ou SCART) peut être utilisé seul pour de la vidéo et de l'audio, alors que le connecteur VGA est associé à des connecteurs de type RCA pour l'audio.
   Avantageusement, ledit au moins un terminal secondaire comprend des moyens émetteur-récepteur sans fil (IR et/ou RF) permettant la communication bidirectionnelle avec une télécommande; ladite télécommande possédant elle-même un moyen d'émission-réception compatible avec ledit téléviseur multifonction.
   La présente invention regroupe un ensemble optimisé de fonctionnalités au sein d'une carte électronique unique, ceci présente de nombreux avantages tels que
- simplifier considérablement la vie de l'utilisateur, sans lui changer ses habitudes;
- favoriser le développement du multimédia depuis le téléviseur;
- faciliter la réception puis l'exploitation des multiples sources audio vidéo sur le téléviseur, notamment en maîtrisant plus facilement les fonctions qui dans l'art antérieur étaient contenues dans ses multiples périphériques et qui selon l'invention sont intégrées dans un même téléviséur-terminal;
- rendre possible l'universalité : décodage et encodage des sources de signaux, diversité des appareils ou des diffuseurs audio vidéo, programmes gratuits ou payants, pilotage par une télécommande classique dédiée/combiné téléphonique ou interactive, réseaux Ethernet ouverts, accès et navigation web sans PC, etc... ).
- favoriser l'implantation dans la maison de plusieurs autres téléviseurs ou home cinéma, avec des terminaux ou d'autres téléviseurs multifonctions ,100 % numériques, multiprogrammes en simultané et universels en matière de connectique de sortie audio/vidéo;
- proposer une alternative de plus grande facilité par rapport à la situation actuelle qui a plutôt tendance à compliquer l'utilisation des appareils électroniques de salon ( Electronique Grand Public ), du fait essentiellement de leur multiplication et de leur empilement sous le téléviseur.

Le téléviseur multifonction selon l'invention n'est pas une simple juxtaposition d'appareils existants. En effet, le téléviseur multifonction évite toute redondance inutile de composants électroniques. Ces composants électroniques sont optimisés notamment en ce qui concerne le microprocesseur puisqu'il s'agit de préférence d'une seule mono-puce, associées à des DSP, qui gère l'ensemble des fonctionnalités. On limite ainsi le coût de revient d'un tel appareil par rapport à l'achat de plusieurs appareils "mono tâche" de l'art antérieur, on assure la compatibilité et on accélère le transfert des contenus. L'utilisateur bénéficie alors d'un appareil simple d'utilisation, performant et de grande qualité.

D'autres avantages et caractéristiques de l'invention apparaîtront à l'examen de la description détaillée d'un mode de mise en oeuvre nullement limitatif, et des dessins annexés, sur lesquels :
La figure 1 est un schéma de principe simplifié des fonctionnalités d'un téléviseur multifonction de salon selon la présente invention;
La figure 2 est une vue schématique des différentes possibilités d'interfaçage du téléviseur multifonction selon l'invention;
La figure 3 est une vue schématique de la structure électronique interne du téléviseur multifonction selon l'invention;
La figure 4 est une vue schématique de différents modes de réception des signaux TV;
La figure 5 est une vue schématique d'un ensemble d'appareils de diffusion externes auxquels le téléviseur multifonction selon l'invention peut être connecté;
La figure 6 est une vue schématique des appareils externes utilisés pour réaliser l'import/export de contenus;
La figure 7 est une vue schématique d'insertion du téléviseur multifonction selon l'invention dans un réseau de communication;
La figure 8 est une vue schématique du téléviseur multifonction selon l'invention connecté à des terminaux numériques secondaires;
La figure 9 est une vue schématique de la structure électronique interne d'un terminal secondaire selon l'invention; et
La figure 10 est une vue schématique des appareils de commande du téléviseur multifonction selon l'invention.

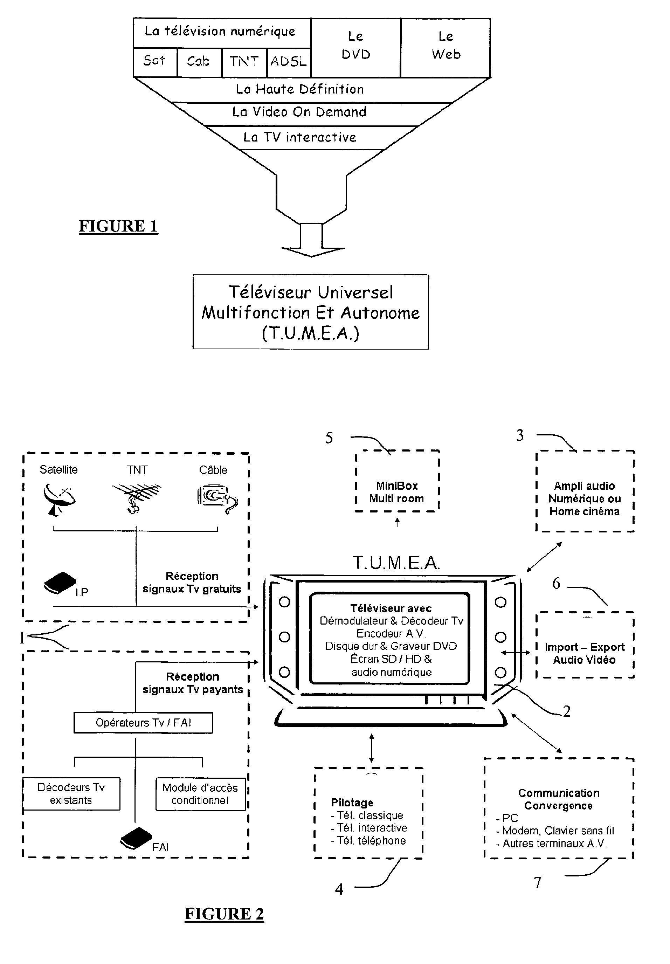

Sur la figure 1 on voit un schéma de principe illustrant les fonctionnalités et modes d'usage du téléviseur multifonction selon l'invention. Les fonctionnalités sont la télévision numérique qui peut être reçue par satellite, câble, TNT (télévision numérique terrestre) ou par l'ADSL. Le téléviseur multifonction fait également office de lecteur DVD ainsi que de navigateur Web. L'ensemble de ces moyens numériques permettant notamment d'apprécier des contenus audio/vidéo en Haute Définition, l'accès à de la VOD ("Video On Demand" pour vidéo à la demande) ainsi qu'à la télévision interactive. Ces caractéristiques font donc partie du téléviseur multifonction selon l'invention qui peut être qualifié d'un téléviseur universel multifonction et autonome (TUMEA). Ce téléviseur multifonction permet ainsi de réaliser du tout numérique, c'est à dire une chaîne numérique de la réception jusqu'à la diffusion.

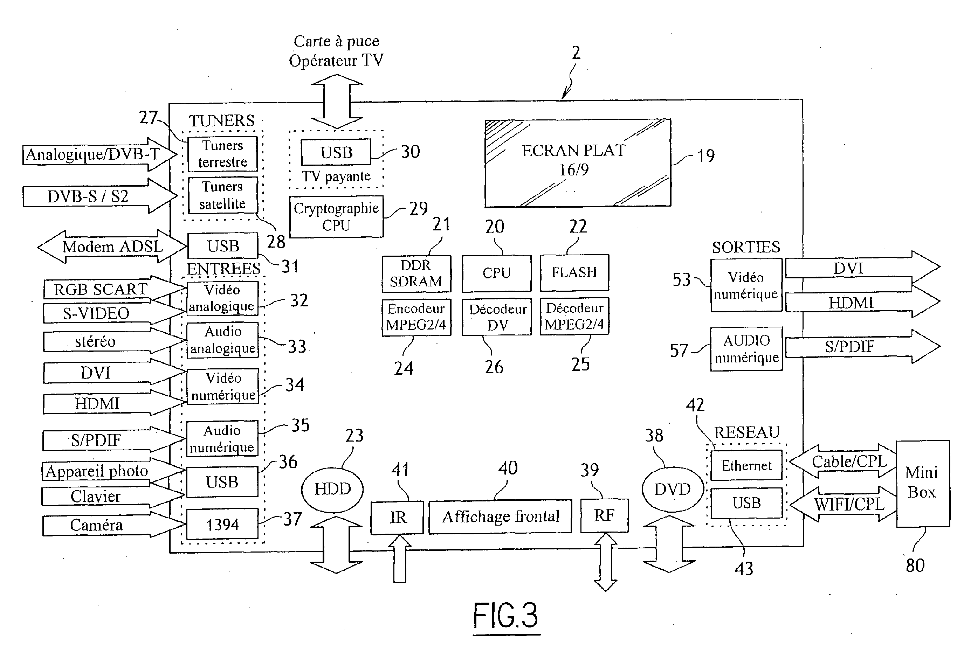

La présente invention est notamment remarquable par le fait qu'elle définit un ensemble de caractéristiques qui permettent d'atteindre une universalité totale. Ces caractéristiques se retrouvent sur les figures 2 et 3 et sont les suivantes :
a) réception des signaux audio vidéo, analogiques et numériques :
   Que les sources soient terrestre, câble, satellite ou encore IP via ADSL/SDSL, elles sont reçues dans le téléviseur multifonction par les moyens suivants :
   - par câble coaxial via 1 ou 2 tuners Tv "hybrides analogique-numérique" terrestres, associés à 1 ou 2 tuners DVB-S ou S2 pour le satellite gratuit.
   - Péritel, VGA et HDMI en entrée ( input ) des décodeurs "bouquets payants" des opérateurs TV ou d'un ordinateur.
   - RJ 45 ou USB pour les entrées IP via ADSL....y compris la V.O.D sur IP.
b) Les bouquets payants : on raccorde les décodeurs ou modems des opérateurs de bouquets payants sur Péritel, VGA ou HDMI ou RJ 45 / USB. Par ailleurs, les technologies actuelles de lecture de cartes d'abonnés "cryptées" se font par connecteurs smartcard (lecteur de carte) ou cardbus (DVB-CI) s'il s'agit de modules C.A.M ("common Acces Module"). Dans la présente invention, on intègre des solutions logicielles propriétaires de décryptage Viaccess®, Mediaguard®, Irdeto®, Connax®; etc..., avec ou sans recours au hardware, dans un boîtier externe qui fait office de lecteur de carte de type "smartcard", branché sur port USB.
c) Import-Export Audio Vidéo numérique et analogique, depuis des connecteurs avants suivants :
   - IEEE1394 pour caméscope numérique DV avec décompression et formatage du DV en MPEG par encodeur.
   - USB pour appareil photo et autres caméscopes numériques MPEG.
   - RCA pour magnétoscope analogique VHS, lecteur de K7 audio, platine tourne disque vinyles (avec modification automatique de l'impédance ).
   - Lecteur de carte mémoire (pour des photos par exemple) multi format de type x en 1.
   - USB pour export vers un disque dur externe, un baladeur audio ou audio/vidéo etc....
d) les fonctions dites de base : restitution en 100% numérique de la vidéo sur écran et de l'audio sur des hauts parleurs, avec les fonctions de démodulateur et décodeur signaux AV numériques, encodeur signaux AV analogiques, import-export A.V, disque dur et graveur DVD, lecteur CD/DVD, port Ethernet ( réseau et IP pour accès et navigation Web, V.O.D... ), distribution A.V vers "multi-rooms" en 100 % numérique.
e) Les sorties Audio vers un ampli audio ou home cinéma... par les connecteurs suivants:
   - S/PDIF en numérique coaxial et optique.
   - stéréo en analogique sur RCA.
f) la distribution A.V vers "multi-rooms" par réseau Ethernet de type câble, Wi-Fi, CPL ou en Wimax et à l'aide des terminaux secondaires.
g) La communication entre appareils électroniques depuis le port Ethernet du téléviseur multifonction : soit par câble depuis le RJ 45, soit par Wi-Fi, soit par CPL sur USB ou RJ 45. Par appareil électronique, on entend un PC, un modem-routeur ADSL ou tout autre appareil doté de connexion réseau.

Par ailleurs, le pilotage du téléviseur multifonction se fait par télécommande et/ou clavier-souris : l'utilisateur a bien entendu à sa disposition une télécommande unique pour toutes les fonctions TV et périphériques habituels ( décodeur, magnétoscope, lecteur CD/DVD), qu'il s'agisse d'une télécommande de base ou bien combinée avec la fonction téléphone comme on le verra ci-après.

Pour l'accès au web et la navigation sur Internet, l'utilisateur dispose d'un clavier sans fil doté d'une fonction "souris" sous forme d'une boule ("TrackBall" ).

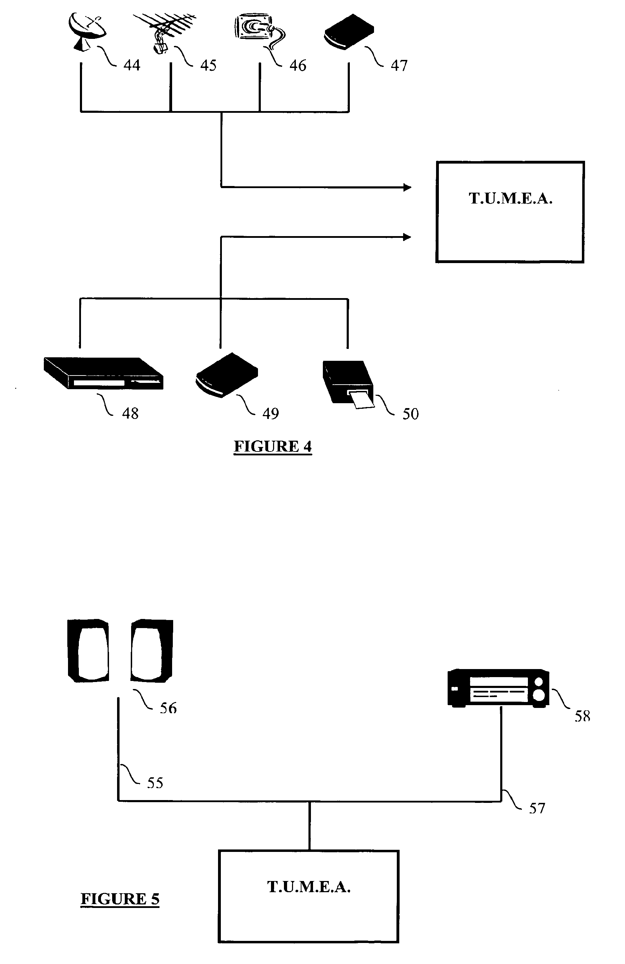

Sur la figure 2 on voit précisément les différentes interfaçages possibles du téléviseur multifonction TUMEA 2. Le groupe 1 représente la réception de signaux TV payants et gratuits. Les chaînes payantes peuvent nécessiter un module d'accès additionnel. Sur la figure 4 on voit un peu plus en détail les quatre modes de réception de signaux TV gratuits : par satellite 44, antenne hertzienne 45, câble 46 et routeur ADSL 47. Pour les chaînes payantes, le signal Tv peut provenir d'un décodeur 48 avec moyen de lecture de carte d'accès ou d'un modem 49 fournit par un fournisseur d'accès Internet avec possibilité de la VOD. On prévoit également un module 50 d'accès conditionnel par connecteur USB qui est apte à permettre le décryptage d'un signal reçu sous forme cryptée.

Le groupe 3 de la figure 2 rassemble les appareils de diffusion tels que représentés sur la figure 5. Le téléviseur multifonction présente une sortie audio analogique stéréo 55 pour connecter des enceintes amplifiées 56, une chaîne HI-FI ou tout autre amplificateur audio; et une sortie audio numérique multicanaux pour connecter notamment un décodeur-amplificateur audio numérique 58 ("Home cinema",...)

Le groupe 4 de la figure 2 représente la télécommande de pilotage du téléviseur.

Le groupe 5 représente les terminaux secondaires permettant notamment de relayer la diffusion des contenus audio/vidéo vers d'autres téléviseurs.

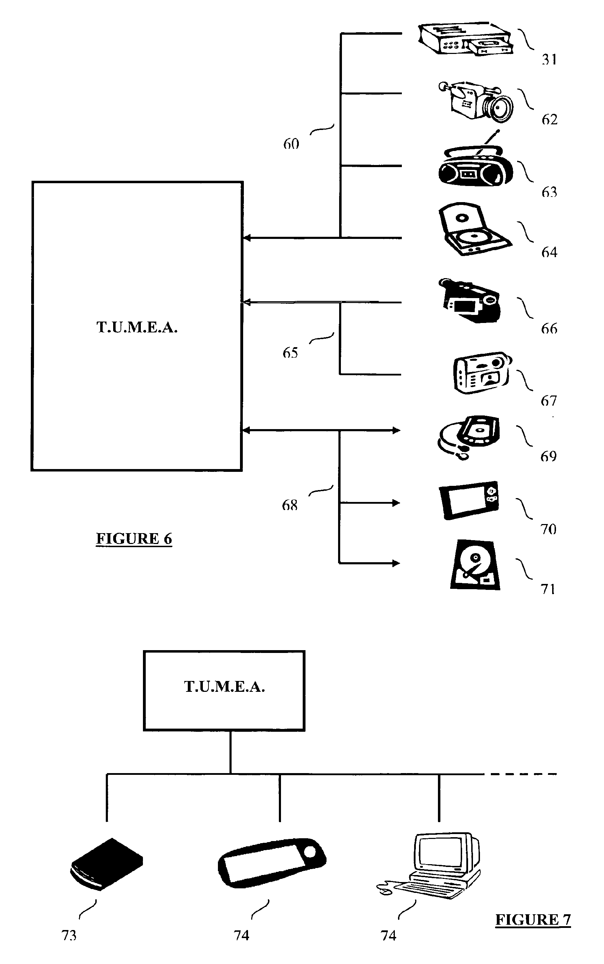

Le groupe 6 représente la fonctionnalité import/export. Il s'agit de connecteurs analogique et numérique destinés à communiquer avec des appareils externes tels qu'illustrés sur la figure 6. Le téléviseur multifonction comporte par exemple une entrée analogique audio/vidéo 60 sur laquelle peuvent se connecter un magnétoscope analogique 61, un caméscope analogique 62, un lecteur de cassette audio 63 ou une platine de disque vinyle 64. L'entrée numérique audio/vidéo 65 permet de connecter des appareils numériques tels qu'un caméscope numérique 66 ou un appareil photo numérique 67. Le connecteur 68 est une entrée/sortie numérique pour connecter un baladeur audio numérique, un baladeur vidéo numérique ou encore un disque dur externe.

Le groupe 7 sur la figure 2 représente les moyens de communication et de convergence du téléviseur multifonction. Il s'agit de permettre au téléviseur multifonction de se connecter à un ordinateur 72, à un modem 73, à d'autres terminaux audio/vidéo ou encore de communiquer avec un clavier sans fil 74 comme on le voit sur la figure 7.

Sur la figure 3 on voit une structure électronique interne, très schématisée, d'un téléviseur multifonction selon l'invention. On distingue un écran plat 19 de type 16/9 pour la restitution vidéo en qualité numérique. Cet écran est intégré ensemble avec des moyens nécessaires et conventionnels pour son bon fonctionnement. Ce téléviseur multifonction est équipé d'une carte électronique dont le coeur est un microprocesseur 20 de type mono-puce associé à deux DSP, l'un dédié pour l'audio et l'autre pour la vidéo. Le téléviseur multifonction comprend en outre des mémoires 21 et 22 de type DDR, SDRAM et Flash, ainsi qu'un disque dur HDD 23 dans lequel sont stockés des contenus numériques notamment au format MPEG 2 ou MPEG 4. La conversion de signaux de format différent vers le MPEG2 ou MPEG 4 est réalisé au moyen d'un encodeur 24. L'opération inverse est réalisée par le décodeur 25. Les contenus numériques provenant par exemple de caméscope numérique sont décodés au moyen d'un décodeur DV 26. Le téléviseur multifonction est naturellement équipé d'un système d'exploitation qui permet de gérer les mémoires, les entrées/sorties et le traitement des données transitant dans le téléviseur multifonction. Les différentes fonctionnalités peuvent être considérées comme des modules fonctionnelles intégrés dans le téléviseur multifonction sous forme de carte fille d'extension ou sous forme de composant électronique dédié ancré sur la carte électronique.

La réception des signaux Tv est réalisée au moyen des tuners terrestres 27 pour les signaux analogiques et DVB-T, et au moyen des tuners satellites 28 pour les signaux DVB-S ou S2. Pour les chaînes payantes, le téléviseur comporte un module de décryptage 29, qui peut être de nature logicielle et/ou matérielle, destiné à décrypter le flux vidéo au moyen d'une clé de décryptage contenu dans un lecteur externe. Ce lecteur peut être celui d'un fournisseur desdites chaînes payantes ou un lecteur prévu pour lire des cartes à puce. De préférence ce lecteur est connecté à une entrée USB dédiée 30.

Le connecteur 31 est de type USB destiné à connecter un modem ADSL pour la communication Internet et/ou la réception de la télévision par ADSL.

Pour assurer l'universalité de connexion, le téléviseur multifonction comporte des entrées telles que :
- l'entrée vidéo analogique 32 sous forme d'un connecteur de type RGB SCART (prise péritel) et d'un connecteur de type S-vidéo,
- l'entrée audio analogique 33 pour la réception de l'audio en stéréo,
- l'entrée vidéo numérique 34 équipée d'un connecteur DVI et d'un connecteur HDMI,
- l'entrée audio numérique 35 avec un connecteur de type S/PDIF,
- l'entrée numérique 36 de type USB pour la réception de signaux en provenance d'un appareil photo ou d'un clavier, et
- l'entrée numérique 37 de type 1394 ("firewire") pour la réception des signaux provenant d'une caméra numérique.

Le téléviseur multifonction comporte au moins les sorties suivantes :
- la sortie audio analogique 55 équipée de connecteur stéréo prise DIN ou écouteur, et
- la sortie audio numérique 57 équipée de connecteur S/PDIF

Avec le téléviseur multifonction selon l'invention, les signaux reçus en entrée peuvent être envoyés, soit vers le disque dur 23 ou le graveur DVD 38, après un éventuel encodage, pour stockage ou archivage et une diffusion ultérieure sur l'écran 19; soit envoyés directement sur l'écran 19 pour une diffusion en temps réel. La présence du disque permet de réaliser des diffusions différées ou semi différées ("timeshifting"). Le téléviseur multifonction est piloté au moyen d'une télécommande unidirectionnelle via le connecteur infrarouge 41 ou au moyen d'une télécommande bidirectionnelle via le connecteur radiofréquence RF 39. Un écran 40 permet d'afficher des données informatives de façon conventionnelle.

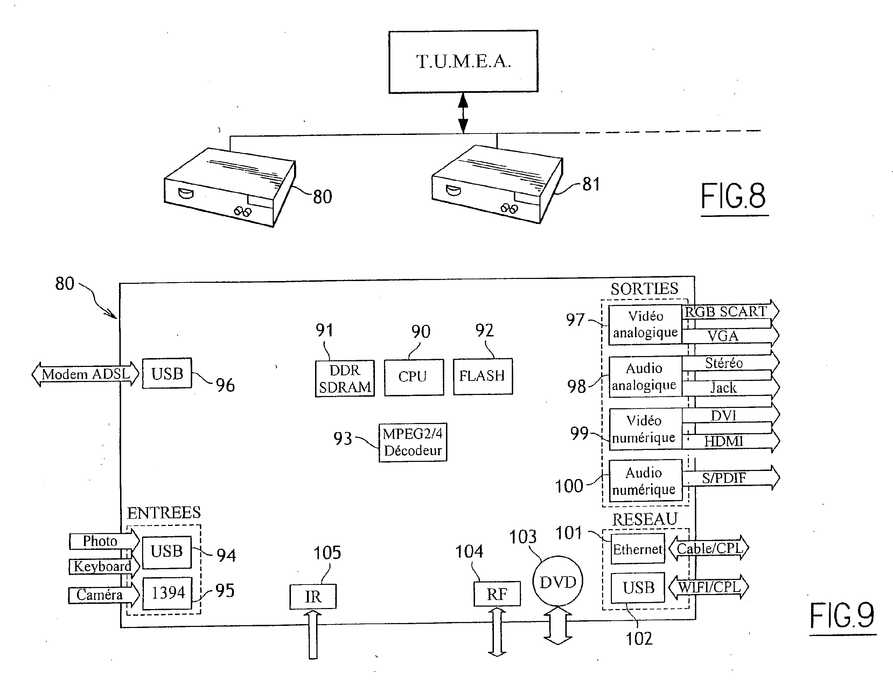

Pour la connexion à un réseau de communication, le téléviseur multifonction comporte une carte Ethernet 42 pour se connecter à un réseau par câble ou courant porteur en ligne CPL, et un connecteur USB pour se connecter à un réseau par WIFI ou courant porteur en ligne. Ces connecteurs réseau permettent notamment de connecter le téléviseur multifonction à d'autres terminaux distants tels que le terminal secondaire 80. Sur la figure 8, on voit le téléviseur multifonction 2 relié à plusieurs terminaux secondaires 80 et 81. La structure électronique simplifiée d'un terminal secondaire 80 est représentée sur la figure 9. Il s'agit d'une carte électronique animée par un microprocesseur 90 et équipée de mémoire DDR, SDRAM 91 et Flash 92. Le décodeur 93 MPEG 2 et MPEG 4 permet notamment de rendre des signaux vidéo reçus via les entrées numériques 94 (USB) et 95 (1394) ainsi que le connecteur USB 96 dédié au modem ADSL, compatibles avec des appareils connectés aux sorties audio/vidéo analogique et numérique 97 à 100. La liaison avec le téléviseur multifonction se fait via les connecteurs Ethernet 101 et USB 102. Ce terminal secondaire comporte également un lecteur graveur DVD 103 ainsi que des modules radiofréquence 104 et infrarouge 105 pour la communication avec une télécommande bidirectionnelle ou unidirectionnelle respectivement.

La présente invention présente de nombreux avantages et fonctionnalités nouvelles :
- universalité de réception de signaux diversifiés ( terrestre, câble, satellite, IP ) en audio vidéo, d'origine analogique et/ou numérique.
- Universalité de réception des signaux d'origine gratuits en MPEG 2 et / ou 4 et en SD ou HD ; ainsi que des signaux venant des décodeurs des opérateurs TV ou F.A.I (Fournisseur d'accès Internet).
- Respect intégral des droits des opérateurs et F.A.I .
- encodage et transcodage intégral en MPEG 4 pour uniformisation de l'ensemble des programmes audio vidéo, en visualisation, enregistrement et archivage en 100 % numérique.
- diffusion en "multi-room" via des terminaux secondaires dit MiniBox, également en 100 % numérique et multi utilisateurs tout comme en multi programmes simultanément.
- ouverture vers l'environnement informatique : réseau Ethernet vers le PC, le Modem ADSL ou tout autre appareil électronique doté d'un port Ethernet.
- export des données contenues dans le téléviseur multifonction, vers une clé USB, un disque dur externe, un baladeur audio vidéo.
- absence de câble qui relient habituellement les terminaux au téléviseur.
- télécommandes interactives ou encore couplées à un combiné téléphonique.
- démontage rapide des disque dur et graveur/lecteur CD/DVD.

Le téléviseur multifonction selon la présente invention est doté d'une interface logicielle de pilotage performante et simple à utiliser.

Avantageusement, cette interface peut être personnalisée, donc individualisée. Elle comporte trois fonctionnalités : un Guide Electronique Personnel (GEP), un Magnétoscope Personnel Multicritères ( MPM) et une Médiathèque Multicritères ( MEM).

### 1) Le Guide Electronique Personnel (GEP):

Cette fonction est directement accessible par la touche « Guide » de la télécommande.

Elle permet de recueillir toutes les informations sur les programmes à venir, afin de les sélectionner soit pour les regarder le moment venu, soit pour en prévoir l'enregistrement sur disque dur, soit pour l'archivage direct sur DVD à l'aide du graveur intégré.

L'architecture électronique de base du téléviseur multifonction est de type PC ou électronique embarqué apte à fonctionner en multi tâches. Ainsi plusieurs utilisateurs peuvent regarder des programmes différents et ceci simultanément depuis différents téléviseurs répartis dans la maison.

Il convient donc de pouvoir gérer des profils utilisateurs distincts et ainsi évoluer vers une véritable télévision personnelle.

### Des profils utilisateurs personnalisés:

Le téléspectateur principal peut être unique, il n'a donc rien de particulier à prévoir pour une utilisation classique de son appareil, si ce n'est la possibilité de gérer sa liste de chaînes favorites et d'activer son code parental (pour la confidentialité des programmes réservés aux adultes).

Cet utilisateur principal a ensuite la faculté de devenir « administrateur » afin de permettre la création de profils téléspectateurs supplémentaires ( jusqu'à 5 ).

Il devra alors s'attribuer un code « administrateur ».

Ensuite, chaque nouveau profil « téléspectateur autonome » pourra être créé et chacun possédera son propre code d'identification et d'utilisation.

Les programmations et les enregistrements effectués sous un profil déterminé sont gérés par celui-ci, et ceci indépendamment les uns des autres.

Seul « l'administrateur » a la possibilité de consulter ou de visualiser les enregistrements des différents profils mais ne peut en aucun cas ni les supprimer ni les archiver.

Les listes de chaînes favorites et l'usage du code parental sont incorporables à tout profil existant.

### Guide des programmes multi critères :

Chaque utilisateur a la faculté d'afficher tout ou partie des informations qui l'intéresse grâce à la sélection simultanée de critères multiples tels que :
- le jour.
- la chaîne.
- La plage horaire comportant une heure de début et de fin.
- le thème.

Plusieurs possibilités sont proposées :
- Lorsque l'on appuie sur la touche « Guide », l'affichage des programmes, indique chaîne par chaîne le programme en cours et le suivant.
- Ensuite après validation sans les critères de sélection, c'est l'ensemble des programmes qui s'affichent.
- Avec sélection d'un ou plusieurs critères simultanément, les affichages obtenus sont moins nombreux et permettent donc d'affiner ses choix.

Changer la valeur des critères modifie l'affichage des programmes sélectionnés.

Les programmes sont affichés en ligne horizontale et sur 3 colonnes :
- La chaîne.
- Programme 1 (horaire et titre).
- Programme 2 (horaire et titre).

Si plus de 2 programmes sont compris dans la plage horaire sélectionnée, une ou plusieurs lignes supplémentaires sont ajoutées à l'horizontale et pour chaque chaîne.

### Exemple : choix entre 14 et 16 h.

**France 3** 13h55 - 14h25 Télé la question 14h25 - 14h55 Côté maison
14h55 - 16h00 Questions au gouvernement

Dans le cas de l'option « ma soirée », la plage horaire est prédéfinie entre 21 et 23 heures. Tout programme commençant dans l'heure précédente (entre 20 et 21h) sera affiché.

Cette option offre l'avantage de proposer un panorama clair des possibilités du début de soirée.

### Mon RDV :

Cette fonction est destinée à tout téléspectateur désireux de ne pas manquer le début de la diffusion d'un programme en particulier.

En effet, cette option permet de sélectionner puis de mémoriser la date, l'horaire et la chaîne du programme désiré et ainsi de fixer un « Rendez-vous » avec le téléspectateur.

Le jour J et à l'heure donnée, le téléviseur s'allume (s'il ne l'était pas) et. affiche la chaîne désirée. Avantageusement un signal sonore ou musical peut être activé.
- Si le téléspectateur est bien au RDV, il valide sa présence à l'aide de la télécommande et regarde son programme en direct.
- Si le téléspectateur est en retard (sa présence n'est pas validée dans la minute), la fonction de Time-shifting est automatiquement mise en route.
- Lorsque le téléspectateur arrive, mais en retard, il lui suffit d'appuyer sur la touche lecture de sa télécommande et il peut visualiser le programme depuis son commencement.
- Si finalement, le téléspectateur « manque » le RDV (lorsque 15 minutes sont écoulées sans validation de sa présence), le programme est automatiquement enregistré sur le disque dur et le téléspectateur pourra le visualiser plus tard à partir de la liste de ses enregistrements.

Très pratique, l'option Rendez-vous est une autre façon de disposer de son temps sans avoir à « subir » les spots publicitaires et craindre de rater le début d'une émission.

De même, en cas d'indisponibilité imprévue, l'émission sélectionnée est préservée sans avoir eu besoin de programmer un enregistrement.

### Programmation unique ou multiple:

Le téléspectateur a le choix entre programmer un enregistrement unique (« simple ») ou programmer plusieurs enregistrements ( multiple) et les regrouper dans un même dossier personnalisé. Le nom donné au préalable à ce dossier permettra de le retrouver plus facilement et plus rapidement dans la liste des enregistrements effectués.

La relecture en sera facilitée, les enregistrements s'enchaînant alors à la suite sans intervention de l'utilisateur

L'enregistrement unique ou multiple peut se faire sur le disque dur ou par l'archivage sur un DVD directement, grâce à la fonction graveur intégrée.

On constate que ces fonctions et possibilités contenues dans le G.E.P sont plus étendues que dans les autres terminaux, et sont multi critères simultanément.

### 2) Magnétoscope Personnel Multicritères ( M.P.M ) :

Cette fonction est directement accessible par une touche de la télécommande.

Elle permet d'accéder directement à la liste des enregistrements uniques ou multiples du disque dur.

### Liste des enregistrements :

Les enregistrements sont affichés sous forme de liste, par date du plus récent au plus ancien.

Les dossiers présents dans la liste contiennent les enregistrements issus d'une ou plusieurs programmations « multiple ».

L'ordre chronologique des enregistrements peut être modifié, ils peuvent être déplacés d'un dossier à un autre ou individualisés ou même supprimés du disque dur.

Ainsi, l'utilisateur peut s'organiser une séance TV personnalisée en choisissant de regarder le ou les programmes sélectionnés. Ces programmes peuvent également être archivés sur un CD ou un DVD, selon des regroupements ou des combinaisons du choix de l'utilisateur.

En générai, dans les guides électroniques de programmes actuels, les critères de sélection pour des enregistrements notamment sont de type "OU", ce qui ne permet pas de les cumuler et ainsi d'affiner une sélection. Dans l'interface selon la présente invention, on a intégré tous les critères de type "ET" et "OU", ce qui offre de nombreuses possibilités et des sélections beaucoup plus fines.

### 3) Médiathèque Multicritères (M.E.M ):

Cette fonction est directement accessible par la touche « Média » de la télécommande.

Elle permet de créer sa propre médiathèque et d'y ajouter ses vidéos personnelles, ses photos numériques et ses musiques préférées.

Dans cette médiathèque, on retrouve les vidéos TV c'est-à-dire les enregistrements effectués. Ces différents médias sont notamment ceux gérés par les moyens Import/Export décrits précédemment.

### Gestion de la médiathèque :

On peut créer des listes de lecture ou d'écoute par média.

Il est possible de les classer individuellement et de les regrouper dans un ou plusieurs dossiers.

Les médias peuvent être mélangés.

Des options de lecture ou d'écoute sont disponibles au sein de ces mêmes listes (lecture ordonnée, ou aléatoire et/ou répétition).

Manipulation disponible pour chaque média :
- Créer ou ajouter un média.
- Ordonner au sein d'un même dossier.
- Déplacer, individualiser et/ou changer de dossier.
- Supprimer.
- Archiver sur CD ou sur DVD.
- Visualiser sur un autre téléviseur ou récepteur audio vidéo grâce à une MiniBox.
- Exporter vers un appareil branché sur le port USB (baladeur audio vidéo, disque dur externe, clé USB, PC, etc...).
- Envoyer par fichier électronique.
- Intégrer dans un FTP (serveur Web) personnaiisé et accessible sur invitation par un mot de passe sécurisé.

Ces deux dernières possibilités nécessitent d'utiliser une connexion Internet haut débit de type ADSL/ SDSL.

Les différentes possibilités proposées sont utilisables partiellement ou totalement, en toute liberté et bien entendu progressivement.

L'intégration des fonctions de base « décodeur, disque dur et graveur CD/DVD » offre de nouvelles possibilités aux téléspectateurs en terme de simplicité, de performances et d'évolutions. La présente interface de pilotage et de gestion permet d'y ajouter des possibilités d'utilisation simples et multicritères.

L'association de ces appareils regroupés et de l'interface « personnelle » de pilotage constitue une avancée très innovante vers la « télévision personnelle ».

Bien sûr, l'invention n'est pas limitée aux exemples qui viennent d'être décrits et de nombreux aménagements peuvent être apportés à ces exemples sans sortir du cadre de l'invention.

## Revendications

1. Téléviseur multifonction sous forme de combiné tout intégré comprenant :
- des moyens de démodulation et décodage de signaux TV numériques;
- un écran d'affichage de la vidéo en qualité numérique,
- des hauts parleurs de diffusion de l'audio en qualité numérique
- des moyens d'enregistrement numérique des signaux numériques sur disque dur intégré, et
- des moyens d'archivage des signaux numériques au moyen d'un graveur CD/DVD intégré.

2. Téléviseur multifonction selon la revendication 1, **caractérisé en ce que** les moyens de démodulation et décodage comprennent au moins :
- un démodulateur associé à un simple ou double tuner pour la réception de signaux TV numérique terrestre,
- un démodulateur associé à un simple ou double tuner pour la réception de signaux TV numérique satellite,
- un démodulateur numérique multicanaux xDSL pour la réception de signaux TV numérique, et
- un démodulateur associé à un simple ou double tuner pour la réception de signaux numérique par câble.

3. Téléviseur multifonction selon la revendication 1 ou 2, **caractérisé en ce qu'**il comprend en outre :
- des moyens de transmission de signaux audio/vidéo et de données vers des terminaux numériques ou analogiques secondaires,
- des moyens pour importer et exporter des contenus audio/vidéo et de données sous forme de fichiers numériques, et
- des moyens de connexions à des réseaux de communication.

4. Téléviseur multifonction selon l'une quelconque des revendications précédentes, **caractérisé en ce qu'**il comprend en outre des moyens de décryptage de signaux TV numérique au moyen d'une clé de décryptage contenue dans un moyen de stockage.

5. Téléviseur multifonction selon l'une quelconque des revendications précédentes, **caractérisé en ce qu'**il comprend des moyens pour restituer de la vidéo sur l'écran dudit téléviseur en qualité numérique et avec des résolutions allant de la Simple Définition à la Haute Définition de 1280 x 720 ou 1920 X 1080 ou supérieure.

6. Téléviseur multifonction selon l'une quelconque des revendications précédentes, **caractérisé en ce qu'**il comprend des moyens pour restituer de l'audio sur les haut parleurs dudit téléviseur en qualité numérique et en multicanaux de type 2 .1 ou supérieur.

7. Téléviseur multifonction selon l'une quelconque des revendications précédentes, **caractérisé en ce qu'**il comprend en outre des connecteurs d'entrée de type RJ45 et USB pour la réception des flux de télévision par xDSL, la vidéo à la demande (VOD) et les contenus Internet, de façon indépendante ou multiplexée.

8. Téléviseur multifonction selon l'une quelconque des revendications précédentes, **caractérisé en ce qu'**il comprend en outre des connecteurs d'entrée audio/vidéo numérique HDMI, DVI, S/PDIF pour la réception audio / vidéo numérique depuis les terminaux des opérateurs TV ou des fournisseurs d'accès Internet.

9. Téléviseur multifonction selon l'une quelconque des revendications précédentes, **caractérisé en ce qu'**il comprend en outre des connecteurs d'entrée audio/vidéo analogique Péritel et VGA+RCA pour la réception audio / vidéo analogique depuis les terminaux des opérateurs TV ou des fournisseurs d'accès Internet.

10. Téléviseur multifonction selon l'une quelconque des revendications précédentes, **caractérisé en ce que** le disque dur et/ou le graveur CD/DVD est de type extractible.

11. Téléviseur multifonction selon l'une quelconque des revendications précédentes, **caractérisé en ce qu'**il comprend en outre un connecteur de type USB apte à être connectée à une clé WiFi afin de communiquer par réseau sans fil avec des ordinateurs et des terminaux externes.

12. Système comprenant un téléviseur multifonction selon l'une quelconque des revendications précédentes, ledit téléviseur multifonction comprenant des moyens de transmission de contenus numériques vers au moins un terminal numérique secondaire servant de relais à la diffusion desdits contenus numériques, la liaison entre ledit téléviseur multifonction et ledit au moins un terminal secondaire étant de type réseau Ethernet, CPL ou sans fil.

13. Système selon la revendication 12, **caractérisé en ce que** ledit au moins un terminal secondaire comprend en outre des connecteurs de sortie audio/vidéo numérique HDMI, DVI, S/PDIF.

14. Système selon la revendication 12 ou 13, **caractérisé en ce que** ledit au moins un terminal secondaire comprend en outre des connecteurs de sortie audio/vidéo analogique Péritel, RCA et VGA.
